# EUROPÄISCHE PATENTANMELDUNG

(11) **EP 4 311 755 A1**
(43) Veröffentlichungstag der Anmeldung: **31.01.2024**
(21) Anmeldenummer: 23184749.2
(22) Anmeldetag: 11.07.2023
(51) Int. Cl.: B62K 21/26, E05B 1/00

(54) **GRIFF MIT EINER OBERFLÄCHEN-MODIFIZIERENDEN SUBSTANZ**

(30) Priorität: 25.07.2022 DE 102022118598
(71) Anmelder: VERITAS AG, 63571 Gelnhausen (DE)
(72) Erfinder: HATTASS, Dirk, 63584 Gründau (DE); GEESMANN, Urs, 63571 Gelnhausen (DE); VAN HOOREN, Dr. Marc, 63579 Freigericht (DE); GRASMÜCK, Thomas, 63549 Ronneburg (DE); ROSEMANN, Michael, 63594 Hasselroth (DE)
(74) Vertreter: Patentship Patentanwaltsgesellschaft mbH

(57) **Zusammenfassung**

Die vorliegende Anmeldung betrifft einen Griff (100), welcher an einem Strukturbauteil, befestigbar ist, umfassend: ein Greifelement (109), welches an dem Strukturbauteil anordbar ist, und aus einem verformbaren Kunststoff gebildet ist, wobei innerhalb des verformbaren Kunststoffs eine Oberflächen-modifizierende Substanz diffusionsstabil eingebettet ist, und wobei die Oberflächen-modifizierende Substanz ausgebildet ist, eine Oberflächeneigenschaft einer Außenoberfläche (111) des Greifelements (109) zu verändern, um eine Besiedelung der Außenoberfläche (111) durch Mikroorganismen zu verhindern.

## Beschreibung

Die vorliegende Anmeldung betrifft einen Griff mit einer Oberflächen-modifizierenden Substanz. Die vorliegende Anmeldung betrifft insbesondere einen Griff mit einem aus einem verformbaren Kunststoff gebildeten Greifelement, in welches eine Oberflächen-modifizierende Substanz diffusionsstabil eingebettet ist.

Herkömmliche Griffe werden durch den Nutzer mit der Hand gegriffen, wobei entsprechende Griffe insbesondere als Fahrradgriffe, Motorradgriffe, Regenschirmgriffe, E-Scooter-Griffe, Ruderbootgriffe, Nordic-Walking-Griffe, Einkaufwagengriffe, Klobürstengriffe, Haltegriffe im öffentlichen Bereich, im medizinischen Bereich oder im Sanitärbereich, Haltegriffe in Bus und Bahn, Türgriffe, Griffe an Armlehnen oder dergleichen ausgebildet sind.

Da beispielsweise in öffentlichen Bereichen angeordnete Griffe von einer Vielzahl von Nutzern ergriffen werden, können insbesondere als Krankheitserreger ausgebildete Mikroorganismen über entsprechende Griffe übertragen werden. Während der Nutzung eines entsprechenden herkömmlichen Griffs wird oftmals Feuchtigkeit von der Hand des jeweiligen Nutzers an den entsprechenden herkömmlichen Griff abgegeben, welche die Besiedelung entsprechender Griffe mit Mikroorganismen begünstigt. Entsprechende Mikroorganismen, wie z.B. Bakterien, Algen, Pilzen, Viren und/oder Protozoen, welche die Griffoberfläche besiedeln, können somit die hygienischen Eigenschaften einer entsprechenden Griffoberfläche eines Griffs nachteilig beeinflussen.

Bei der Verwendung von Bioziden in Griffen zur Beeinträchtigung der Besiedelung von Mikroorganismen gibt es jedoch aufgrund der relevanten Biozidverordnung signifikante Einschränkungen. Da der Nutzer einen entsprechenden Griff mit der Hand ergreift, und somit entsprechende in Griffen verwendete Biozide direkt über die Haut aufnehmen kann, wird der Einsatz von Bioziden in Griffen oftmals vollständig verhindert, bzw. signifikant beeinträchtigt.

Es ist die der Anmeldung zugrundeliegende Aufgabe, einen Griff bereitzustellen, wobei die Besiedelung der Griffoberfläche des Griffs mit Mikroorganismen beeinträchtigt ist, und wobei die Abgabe von Bioziden über die Griffoberfläche des Griffs verhindert wird.

Diese Aufgabe wird durch die Gegenstände mit den Merkmalen nach den unabhängigen Ansprüchen gelöst. Vorteilhafte Ausführungsformen der Anmeldung sind Gegenstand der Figuren, der Beschreibung und der abhängigen Ansprüche.

Gemäß einem ersten Aspekt der Anmeldung wird die Aufgabe durch einen Griff gelöst, welcher an einem Strukturbauteil, befestigbar ist, umfassend ein Greifelement, welches an dem Strukturbauteil anordbar ist, und aus einem verformbaren Kunststoff gebildet ist, wobei innerhalb des verformbaren Kunststoffs eine Oberflächen-modifizierende Substanz diffusionsstabil eingebettet ist, und wobei die Oberflächen-modifizierende Substanz ausgebildet ist, eine Oberflächeneigenschaft einer Außenoberfläche des Greifelements zu verändern, um eine Besiedelung der Außenoberfläche durch Mikroorganismen zu verhindern.

Der Griff ist insbesondere als ein Fahrradgriff, ein Motorradgriff, ein Regenschirmgriff, ein E-Scooter-Griff, ein Ruderbootgriff, ein Nordic-Walking-Griff, ein Einkaufwagengriff, ein Klobürstengriff, ein Haltegriff im öffentlichen Bereich, im medizinischen Bereich oder im Sanitärbereich, ein Haltegriff in Bus und Bahn, ein Türgriff, ein Griff an Armlehnen oder dergleichen ausgebildet.

Insbesondere ist der Griff als ein Fahrradgriff ausgebildet.

Insbesondere weist der Griff ein Innenelement auf, welches aus einem nicht verformbaren Material gebildet ist, wobei das Innenelement einen Befestigungsbereich aufweist, welcher an dem Strukturbauteil befestigbar ist; wobei das Außenelement hierbei an einer Außenseite des Innenelements angeordnet ist. Das Innenelement weist hierbei eine stützende Funktion auf.

Alternativ ist das Greifelement direkt an dem Strukturbauteil befestigbar. In diesem Fall kann durch das Nichtvorhandensein des Innenelements in dem Griff eine deutliche Kosten- und Gewichtsreduzierung des Griffs erreicht werden.

Das nicht verformbare Material des Innenelements umfasst insbesondere einen nicht verformbaren Kunststoff.

Das Innenelement ist insbesondere als eine Innenhülse ausgebildet, wobei die Innenhülse eine Hülsenwandung aufweist, welche einen Hülseninnenraum begrenzt. Hierbei ist das Strukturbauteil insbesondere in den Hülseninnenraum der aus einem nicht verformbaren Kunststoff geformten Innenhülse einführbar, um eine stabile Befestigung der Innenhülse an dem Strukturbauteil zu erreichen.

Insbesondere ist das Greifelement als eine Außenhülse ausgebildet, welche eine Außenhülsenwandung aufweist, welche an der Außenseite des Innenelements angeordnet ist.

Wenn der Fahrradgriff alternativ kein Innenelement aufweist und direkt an dem Strukturbauteil befestigt wird, begrenzt die Außenhülsenwandung des als Außenhülse ausgebildeten Greifelements einen Außenhülseninnenraum, welcher an dem Strukturbauteil befestigbar, insbesondere aufsteckbar ist.

Das Strukturbauteil umfasst ein beliebiges Bauteil an dem der Griff befestigt werden kann. Insbesondere ist das Strukturbauteil als ein stangenförmiges Strukturbauteil ausgebildet. Ist der Griff insbesondere als ein Fahrradgriff ausgebildet, umfasst das Strukturbauteil eine Lenkstange des Fahrrads an dem der Fahrradgriff befestigbar ist.

Das Greifelement ist aus einem verformbaren Kunststoff ausgebildet und ermöglicht daher ein ergonomisches Greifen des Griffs durch die Hand eines Nutzers.

Insbesondere ist das Greifelement als eine Außenhülse ausgebildet, welche auf die Außenseite des als Innenhülse ausgebildeten Innenelements aufgeschoben ist.

Insbesondere ist das Greifelement, insbesondere Außenhülse, mit dem Innenelement, insbesondere der Innenhülse verbunden, insbesondere stoffschlüssig verbunden.

Insbesondere ist das Greifelement, insbesondere Außenhülse, radial außerhalb des Innenelements, insbesondere Innenhülse, innerhalb des Griffs angeordnet.

Die innerhalb des verformbaren Kunststoffs des Greifelements, insbesondere Außenhülse, des Griffs diffusionsstabil eingebettete Oberflächen-modifizierende Substanz ist ausgebildet, eine Oberflächeneigenschaft der Außenoberfläche des Greifelements zu verändern, um eine Besiedelung der Außenoberfläche des Greifelements durch Mikroorganismen zu verhindern, insbesondere signifikant zu reduzieren.

Dadurch beeinträchtigt die durch die Oberflächen-modifizierende Substanz veränderte Oberflächeneigenschaft der Außenoberfläche des Greifelements an der Außenoberfläche des Greifelements vorhandene Mikroorganismen, wie z.B. Bakterien, Algen, Pilzen, Viren und/oder Protozoen. Durch die veränderte Oberflächeneigenschaft der Außenoberfläche des Greifelements kann die Bindung, insbesondere Adhäsion, der Mikroorganismen an die Außenoberfläche des Greifelements beeinträchtigt werden, und/oder können an der Außenoberfläche des Greifelements anheftende Mikroorganismen beeinträchtigt, insbesondere abgetötet oder inaktiviert, werden.

Dadurch kann auch der technische Vorteil erreicht, dass die Bildung eines von Mikroorganismen gebildeten Biofilms an der Außenoberfläche des Greifelements verhindert, bzw. die Menge des gebildeten Biofilms signifikant reduziert werden kann.

Die Oberflächen-modifizierende Substanz umfasst insbesondere eine Oberflächen-polarisierende Substanz, welche ausgebildet ist, eine Polarisation der Außenoberfläche des Greifelements zu verändern, um eine Besiedelung der Außenoberfläche des Greifelements durch Mikroorganismen zu verhindern, insbesondere signifikant zu reduzieren.

Durch die Veränderung der Polarisation der Außenoberfläche des aus einem verformbaren Kunststoff bestehenden Greifelements ändert sich die Verteilung von Ladungen, insbesondere positiven und negativen Ladungen, an der Außenoberfläche des Greifelements, wodurch an der Außenoberfläche des Greifelements haftende Mikroorganismen polarisiert werden können, insbesondere durch Übertragung der Ladungen von der polarisierten Außenoberfläche des Greifelements auf die Mikroorganismen. Durch die entsprechende Polarisation kann die Bindung, insbesondere Adhäsion, der Mikroorganismen an die Außenoberfläche des Greifelements beeinträchtigt werden, bzw. können die Mikroorganismen beeinträchtigt, insbesondere abgetötet oder inaktiviert, werden.

Ferner ist die Oberflächen-modifizierende, insbesondere Oberflächen-polarisierende Substanz, diffusionsstabil innerhalb des verformbaren Kunststoffs des Greifelements eingebettet, so dass eine Diffusion der Oberflächen-modifizierenden Substanz aus dem verformbaren Kunststoff des Greifelements in den Außenbereich des Griffs verhindert, insbesondere signifikant reduziert wird. Somit kann die Oberflächen-modifizierende Substanz während des Betriebs des Griffs nicht oder nur in äußerst geringem Umfang an den Außenbereich des Griffs abgegeben werden, so dass eine Aufnahme der Oberflächen-modifizierenden Substanz über die Hand des Nutzers ausgeschlossen ist.

Somit gilt gemäß einer europäischen Richtlinie eine diffusionsstabil innerhalb des verformbaren Kunststoffs des Greifelements eingebettete Oberflächen-modifizierende Substanz gemäß der vorliegenden Offenbarung nicht als ein Biozid, so dass sich regulatorische Erleichterungen bei der Zulassung eines entsprechenden Griffs ergeben, da die entsprechende Biozidverordnung hierbei nicht zum Tragen kommt.

Zudem wird durch die diffusionsstabile Einbettung der Oberflächen-modifizierenden Substanz in dem Greifelement sichergestellt, dass die Konzentration der Oberflächen-modifizierenden Substanz innerhalb des verformbaren Kunststoffs des Greifelements während des Betriebs des Griffs nicht oder nur in äußerst geringem Umfang absinkt, so dass die Oberflächen-modifizierenden Eigenschaften der Oberflächen-modifizierenden Substanz für einen langen Zeitraum, insbesondere für mehrere Jahre, aufrechterhalten werden können.

In einer vorteilhaften Ausführungsform ist der Griff als ein Fahrradgriff, ein Motorradgriff, ein Regenschirmgriff, ein E-Scooter-Griff, ein Ruderbootgriff, ein Nordic-Walking-Griff, ein Einkaufwagengriff, ein Klobürstengriff, ein Haltegriff im öffentlichen Bereich, im medizinischen Bereich oder im Sanitärbereich, ein Haltegriff in Bus und Bahn, ein Türgriff, ein Griff an Armlehnen oder dergleichen ausgebildet ist.

Dadurch wird der technische Vorteil erreicht, dass ein vielfältiger Einsatz des Griffs in unterschiedlichsten Anwendungsgebieten möglich ist.

In einer vorteilhaften Ausführungsform ist der Griff als ein Fahrradgriff ausgebildet, welcher an einer Lenkstange eines Fahrrads befestigbar ist, umfassend ein als Außenschicht ausgebildetes Greifelement, welches an der Lenkstange anordbar ist, und aus einem verformbaren Kunststoff gebildet ist, wobei innerhalb des verformbaren Kunststoffs eine Oberflächen-modifizierende Substanz diffusionsstabil eingebettet ist, und wobei die Oberflächen-modifizierende Substanz ausgebildet ist, eine Oberflächeneigenschaft einer Außenoberfläche der Außenschicht zu verändern, um eine Besiedelung der Außenoberfläche durch Mikroorganismen zu verhindern.

Dadurch wird der technische Vorteil erreicht, dass der Fahrradgriff durch den Nutzer über einen längeren Zeitraum genutzt werden kann, ohne dass sich eine nachteilige Besiedelung der Außenoberfläche mit Mikroorganismen ergibt.

Insbesondere weist der Fahrradgriff ein als Innenhülse ausgebildetes Innenelement auf, welches aus einem nicht verformbaren Material gebildet ist, wobei die Innenhülse einen Befestigungsbereich aufweist, welcher an der Lenkstange befestigbar ist, wobei die Außenschicht hierbei an einer Außenseite der Innenhülse angeordnet ist.

Weist der Fahrradgriff alternativ und insbesondere keine Innenhülse auf, ist die Außenschicht direkt an der Lenkstange befestigbar.

In einer vorteilhaften Ausführungsform umfasst die Oberflächen-modifizierende Substanz eine Oberflächen-polarisierende Substanz, welche ausgebildet ist, eine Polarisation der Außenoberfläche des Greifelements zu verändern, um eine Besiedelung der Außenoberfläche durch Mikroorganismen zu verhindern, wobei die Oberflächen-polarisierende Substanz insbesondere eine Sterion-Substanz umfasst.

Dadurch wird der technische Vorteil erreicht, dass durch die Oberflächen-polarisierende Substanz, insbesondere Sterion-Substanz, eine für die Mikroorganismen nachteilige veränderte Polarisation der Außenoberfläche des Greifelements für einen langen Betriebszeitraum des Griffs aufrechterhalten werden kann, ohne dass die Oberflächen-polarisierende Substanz, insbesondere Sterion-Substanz, hierbei an den Außenbereich des Griffs abgegeben wird, bzw. die Abgabe signifikant reduziert wird.

Hierbei kann die Oberflächen-polarisierende Substanz, insbesondere Sterion-Substanz, ausgebildet sein, eine bipolare Oberflächen-Polarisation der Außenoberfläche des Greifelements zu verursachen, um eine Besiedelung der Außenoberfläche des Greifelements durch Mikroorganismen zu verhindern, insbesondere signifikant zu reduzieren.

Eine veränderte Polarisation, insbesondere bipolare Oberflächen-Polarisation, der Außenoberfläche des Greifelements bewirkt eine Veränderung der Verteilung von Ladungen, insbesondere positiven und negativen Ladungen, auf der Außenoberfläche des Greifelements, welche auf Mikroorganismen an der Außenoberfläche des Greifelements übertragen werden können und dadurch die zelluläre Oberfläche der Mikroorganismen polarisieren können. Dadurch kann die Bindung der Mikroorganismen an der Außenoberfläche des Greifelements beeinträchtigt werden und/oder können die Mikroorganismen beeinträchtigt, insbesondere abgetötet oder inaktiviert werden, wodurch zudem eine Biofilmbildung an der Außenoberfläche des Greifelements beeinträchtigt wird.

In einer vorteilhaften Ausführungsform umfasst die Oberflächen-modifizierende Substanz, insbesondere Oberflächen-polarisierende Substanz, eine metallorganische Verbindung, wobei die metallorganische Verbindung insbesondere eine Kupfer-Thiolat-Verbindung umfasst.

Dadurch wird der technische Vorteil erreicht, dass die Verwendung einer metallorganischen Verbindung eine besonders vorteilhafte Polarisation der Außenoberfläche des Greifelements ermöglicht.

Eine metallorganische Verbindung umfasst hierbei insbesondere ein Metall, insbesondere ein Übergangsmetall, insbesondere Kupfer, welches eine positive Partialladung in der metallorganische Verbindung bereitstellt, und einen oder eine Mehrzahl von organischen Liganden, welche negative Partialladungen in der metallorganische Verbindung bereitstellen, um eine wirksame Polarisation der Außenoberfläche des Greifelements zu erreichen.

Der zumindest eine organische Ligand der metallorganischen Verbindung kann hierbei insbesondere Heteroatome, wie z.B. Schwefel, Stickstoff und/oder Sauerstoff umfassen, welche eine negative Partialladung in der metallorganischen Verbindung bereitstellen.

Der zumindest eine organische Ligand der metallorganischen Verbindung kann eine Kohlenwasserstoffverbindung mit zumindest einem Heteroatom, insbesondere Schwefel, Stickstoff und/oder Sauerstoff umfassen. Insbesondere umfasst der zumindest eine organische Ligand der metallorganischen Verbindung eine Thiolat-Verbindung.

Insbesondere ist die metallorganische Verbindung eine Kupfer-Thiolat-Verbindung, welche insbesondere auf einem Bariumsulfat-Substrat angeordnet ist.

In einer vorteilhaften Ausführungsform ist die Oberflächen-modifizierende Substanz, insbesondere Oberflächen-polarisierende Substanz, in dem Greifelements in einem Konzentrationsbereich von 0,01 Gew.-% bis 1 Gew.-%, insbesondere von 0,025 Gew.-% bis 0,1 Gew.-% vorhanden.

Dadurch wird der technische Vorteil erreicht, dass durch die beanspruchten Konzentrationsbereiche der Oberflächen-modifizierenden Substanz eine ausreichende Beeinträchtigung der an der Außenoberfläche des Greifelements haftenden Mikroorganismen erreicht wird. Insbesondere beträgt die Konzentration der Oberflächen-modifizierenden Substanz, insbesondere Oberflächen-polarisierenden Substanz, in dem Greifelement 0,045 Gew.-%.

Die Konzentrationsangaben beziehen sich hierbei auf das Gewicht der Oberflächen-modifizierenden Substanz, insbesondere Oberflächen-polarisierenden Substanz, insbesondere der metallorganischen Verbindung, in dem Greifelement in Bezug auf die Summe des Gewicht des Kunststoffs und des Gewichts der Oberflächen-modifizierenden Substanz in dem Greifelement.

In einer vorteilhaften Ausführungsform ist die Oberflächen-modifizierende Substanz in das gesamte aus dem verformbaren Kunststoff geformte Greifelement, insbesondere Außenschicht eingebettet, oder ist die Oberflächen-modifizierende Substanz in einem der Außenoberfläche zugewandten Bereich des aus dem verformbaren Kunststoff geformten Greifelements, insbesondere Außenschicht eingebettet, wobei insbesondere der Bereich durch die Außenoberfläche begrenzt ist und sich von der Außenoberfläche nach innen erstreckt.

Dadurch wird der technische Vorteil erreicht, dass ein Einbetten der Oberflächen-modifizierenden Substanz in das gesamte aus dem verformbaren Kunststoff geformte Greifelement eine besonders einfache und kostengünstige Herstellung des Griffs ermöglicht.

Wenn die Oberflächen-modifizierende Substanz hingegen nur in dem der Außenoberfläche zugewandten Bereich des Greifelements eingebettet wird, kann ein gezieltes Einbringen der Oberflächen-modifizierenden Substanz in räumlicher Nähe der Außenoberfläche sichergestellt werden, wodurch eine besonders wirksame Veränderung der Oberflächeneigenschaft der Außenoberfläche sichergestellt werden kann, ohne dass das gesamte Volumen des Greifelements mit der Oberflächen-modifizierenden Substanz versehen werden muss, wodurch sich Kostenersparnisse ergeben.

In einer vorteilhaften Ausführungsform weist das aus einem verformbaren Kunststoff geformte Greifelement, insbesondere Außenschicht eine Kunststoff-Matrix auf, in welcher die Oberflächen-modifizierende Substanz diffusionsstabil eingebettet ist, wobei die Kunststoff-Matrix ausgebildet ist, ein Abgeben der Oberflächen-modifizierenden Substanz über die Außenoberfläche zu reduzieren, insbesondere zu verhindern.

Dadurch wird der technische Vorteil erreicht, dass die Kunststoff-Matrix eine besonders vorteilhafte diffusionsstabile Einbettung der Oberflächen-modifizierenden Substanz innerhalb des verformbaren Kunststoffs ermöglicht, so dass während der Betriebsdauer des Griffs die Oberflächen-modifizierende Substanz nicht oder nur in äußerst geringem Umfang aus dem verformbaren Kunststoff entweichen kann.

In einer vorteilhaften Ausführungsform umfasst der verformbare Kunststoff des Greifelements, insbesondere Außenschicht ein Elastomer, und/oder ein thermoplastisches Elastomer (TPE), insbesondere ein Styrol-Block-Copolymer (TPS).

Dadurch wird der technische Vorteil erreicht, dass die genannten verformbaren Kunststoffe des Greifelements eine besonders herausragende diffusionsstabile Einbettung der Oberflächen-modifizierenden Substanz in dem jeweiligen verformbaren Kunststoff derart sicherstellen, dass die Oberflächen-modifizierende Substanz nicht oder nur in äußerst geringem Maße aus dem jeweiligen verformbaren Kunststoff des Greifelements aus dem Griff austreten kann.

Der genannten verformbaren Kunststoffe des Greifelements umfassen hierbei insbesondere einen einzigen verformbaren Kunststoff oder eine Mehrzahl von unterschiedlichen verformbaren Kunststoffen.

Der verformbare Kunststoff des Greifelements kann ein Elastomer umfassen, insbesondere ein Polyolefin und/oder Polyamid, insbesondere Polyethylen, hochdichtes Polyethylen (HDPE) oder Polypropylen.

Der verformbare Kunststoff des Greifelements kann ein thermoplastisches Elastomer (TPE) umfassen, insbesondere eine Mischung aus Polyamid (PA) oder Polyolefin, insbesondere Polypropylen (PP) oder Polyethylen (PE) oder Styrolblockcoplymere, vorzugsweise Styrol-Ethylen-Butylen-Styrol (SEBS), mit Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), und/oder Ethylen-Vinylacetat-Kautschuk (EVM).

In einer vorteilhaften Ausführungsform weist der Griff ein Innenelement auf, welches aus einem nicht verformbaren Material gebildet ist, wobei das Innenelement einen Befestigungsbereich aufweist, welcher an dem Strukturbauteil befestigbar ist, wobei das Greifelement an einer Außenseite des Innenelements angeordnet ist, wobei das nicht verformbare Material insbesondere als ein verformbarer Kunststoff ausgebildet ist, welcher ein Thermoplast, insbesondere Polypropylen, umfasst.

Dadurch wird der technische Vorteil erreicht, dass die genannten Materialien eine wirksame strukturelle Stabilität des Innenelements sicherstellen.

In einer vorteilhaften Ausführungsform ist das Innenelement, insbesondere die Innenhülse mit dem Greifelement, insbesondere der Außenschicht, stoffschlüssig verbunden.

Dadurch wird der technische Vorteil erreicht, dass eine stabile Verbindung zwischen dem Greifelement und dem Innenelement erreicht werden kann.

In einer vorteilhaften Ausführungsform umfasst der Fahrradgriff ein als Innenhülse ausgebildetes Innenelement, welches aus einem nicht verformbaren Material gebildet ist, wobei die Innenhülse einen Befestigungsbereich aufweist, welcher an der Lenkstange befestigbar ist; wobei die Außenschicht an der Außenseite der Innenhülse angeordnet ist, wobei die Innenhülse insbesondere an einem ersten Ende eine erste Hülsenöffnung aufweist, durch welche die Lenkstange in einen Hülseninnenraum der Innenhülse einführbar ist, um den Griff an der Lenkstange anzuordnen, und wobei die Innenhülse insbesondere an einem dem ersten Ende abgewandten zweiten Ende eine zweite Hülsenöffnung aufweist, wobei die zweite Hülsenöffnung insbesondere nicht verschlossen ausgebildet ist, oder insbesondere durch ein Verschlusselement verschlossen ist.

Dadurch wird der technische Vorteil erreicht, dass bei einem als Fahrradgriff ausgebildeten Griff die Lenkstange vorteilhaft durch die erste Hülsenöffnung in den Hülseninnenraum der Innenhülse einführbar ist. Ist die an dem zweiten Ende angeordnete zweite Hülsenöffnung verschlossen, wird ein Eintritt von Verschmutzungen in den Hülseninnenraum der Innenhülse verhindert. Ist die zweite Hülsenöffnung offen kann über einen Adapter insbesondere ein Haltehorn an dem zweiten Ende der Innenhülse befestigt werden.

In einer vorteilhaften Ausführungsform umfasst der Fahrradgriff ein Befestigungselement, insbesondere Klemmring, welcher zumindest abschnittsweise umlaufend an dem Befestigungsbereich der Innenhülse anliegt, um den Befestigungsbereich an der Lenkstange zu befestigen.

Dadurch wird der technische Vorteil erreicht, dass der Fahrradgriff durch das Befestigungselement, insbesondere Klemmring, wirksam an der Lenkstange befestigt werden kann.

In einer vorteilhaften Ausführungsform weist die Außenschicht eine Mehrzahl von Noppen auf, welche an der Außenoberfläche der Außenschicht angeordnet sind, wobei die Noppen insbesondere in konzentrischen Ringen entlang der Außenoberfläche angeordnet sind.

Dadurch wird der technische Vorteil erreicht, dass die Noppen ein Abrutschen der Hand des Nutzers von der Außenoberfläche der Außenschicht verhindern.

In einer vorteilhaften Ausführungsform ist zwischen einem ersten Außenschichtsende und einem dem ersten Außenschichtsende abgewandten zweiten Außenschichtsende der Außenschicht ein mittiger Bereich der Außenschicht geformt, wobei der mittige Bereich insbesondere einen größeren Durchmesser aufweist, als der Durchmesser des ersten und/oder zweiten Außenschichtendes.

Dadurch wird der technische Vorteil erreicht, dass der mittige Bereich eine wirksame Stütze der Handinnenfläche der Hand des Nutzers des Fahrradgriffs sicherstellt.

In einer vorteilhaften Ausführungsform ist der Griff als ein Extrusionsbauteil oder als Spritzgussbauteil ausgebildet, wobei insbesondere das Greifelement radial außerhalb auf das Innenelement extrudiert oder aufgespritzt ist.

Dadurch wird beispielsweise der technische Vorteil erreicht, dass ein als Extrusionsbauteil oder Spritzgussbauteil hergestellter Griff einfach und kostengünstig, insbesondere in der Form flexibel, herstellbar ist.

Gemäß einem zweiten Aspekt der Anmeldung wird die Aufgabe durch ein Verfahren zum Herstellen eines Griffs gelöst, wobei das Verfahren die folgenden Verfahrensschritte umfasst: Bereitstellen eines verformbaren Kunststoffs; Bereitstellen einer Oberflächen-modifizierenden Substanz; Mischen des verformbaren Kunststoffs mit der Oberflächen-modifizierenden Substanz; Schmelzen der Mischung umfassend den verformbaren Kunststoff und die Oberflächen-modifizierende Substanz, um eine Kunststoffschmelze zu erhalten; Formen, insbesondere Spritzgießen oder Extrudieren, der Kunststoffschmelze, um ein Greifelement aus verformbaren Kunststoff zu erhalten, wobei innerhalb des verformbaren Kunststoffs die Oberflächen-modifizierende Substanz diffusionsstabil eingebettet ist; und Vulkanisieren des verformbaren Kunststoffs des Greifelements, um den Griff herzustellen. Dadurch wird beispielsweise der technische Vorteil erreicht, dass in der Kunststoffschmelze eine besonders wirksame Verteilung der Oberflächen-modifizierenden Substanz innerhalb des verformbaren Kunststoffs sichergestellt werden kann, und dass durch das sich anschließende Abkühlen der Kunststoffschmelze während des Spritzgussvorgangs sichergestellt wird, dass die Oberflächen-modifizierende Substanz vorteilhaft in dem verformbaren Kunststoff des Greifelements eingebettet ist. Durch den Spritzgussvorgang können der Griff in einer großen Anzahl und mit einem geringen Kostenaufwand hergestellt werden, und zudem kann die Form des Griffs flexibel gewählt werden.

In einer vorteilhaften Ausführungsform wird das Vulkanisieren nach dem Formen, insbesondere Spritzgießen oder Extrudieren, der Kunststoffschmelze durchgeführt wird, oder wird das Formen, insbesondere Spritzgießen oder Extrudieren, der Kunststoffschmelze und das Vulkanisieren in einem gemeinsamen Verfahrensschritt durchführt.

Dadurch wird beispielsweise der technische Vorteil erreicht, dass eine vorteilhafte Herstellung des Griffs sichergestellt ist.

Die für den Griff gemäß dem ersten Aspekt beschriebenen vorteilhaften Ausführungsformen sind ebenfalls vorteilhafte Ausführungsformen für das Verfahren zum Herstellen eines Griffs gemäß dem zweiten Aspekt.

Die für das Verfahren gemäß dem zweiten Aspekt beschriebenen vorteilhaften Ausführungsformen sind ebenfalls vorteilhafte Ausführungsformen für den Griff gemäß dem ersten Aspekt.

Ausführungsbeispiele der Anmeldung sind in den Zeichnungen dargestellt und werden im Folgenden näher beschrieben.

Es zeigen:
- Figs. 1, 2: schematische Ansichten eines Griffs gemäß einer Ausführungsform;
- Fig. 3: eine schematisch Ansicht eines Griffs gemäß einer weiteren Ausführungsform; und
- Fig. 4: eine schematische Darstellung eines Verfahrens zum Herstellen eines Griffs gemäß der vorliegenden Anmeldung.

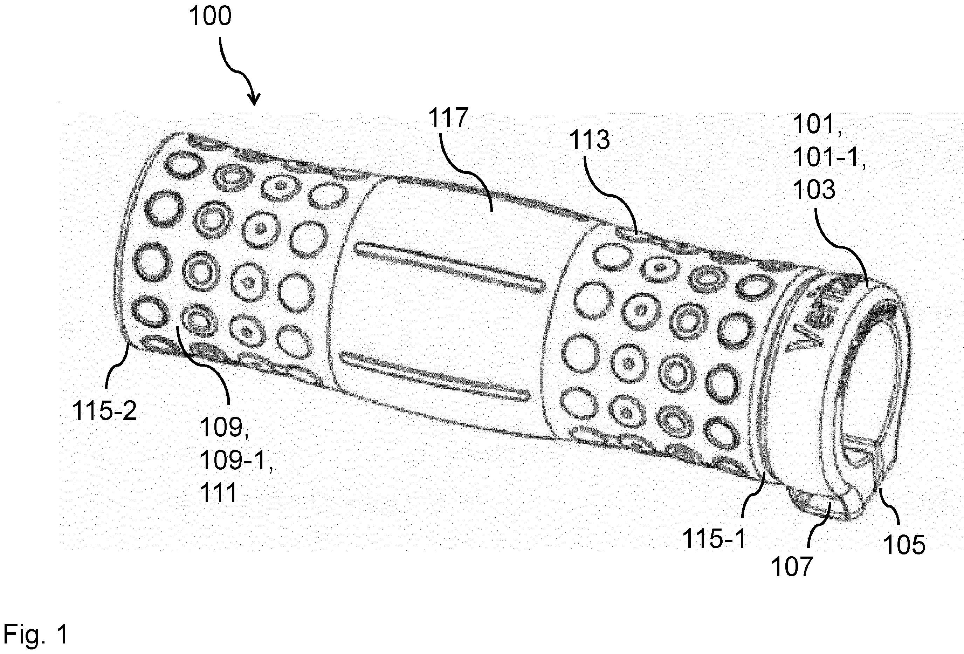

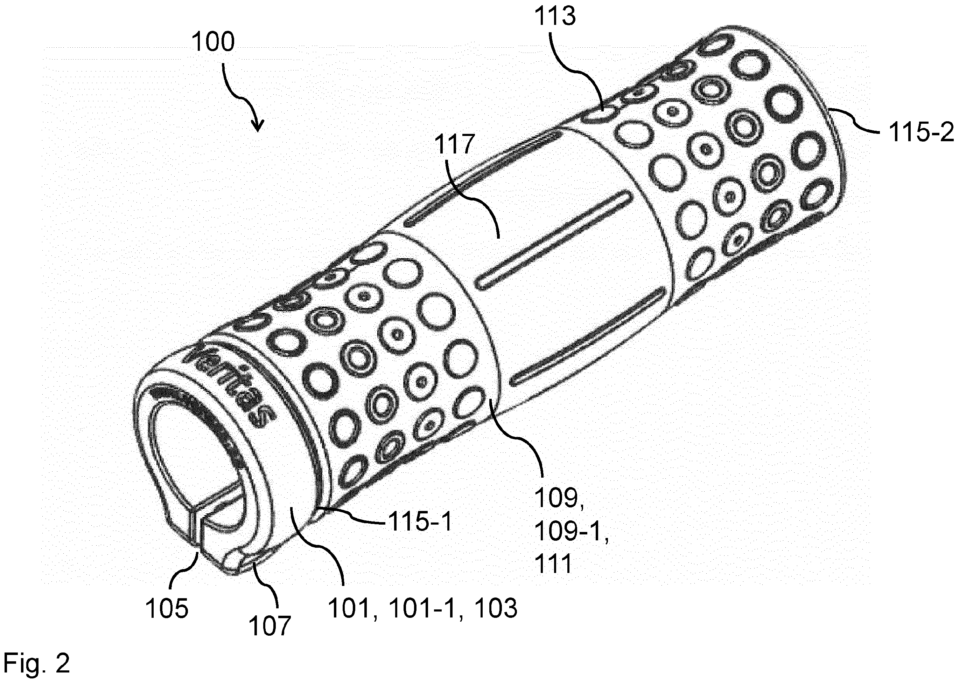

Die Figuren 1 und 2 zeigen schematische Ansichten eines Griffs gemäß einer Ausführungsform. Der Griff 100 ist insbesondere als ein Fahrradgriff 100-1 ausgebildet. In der Fig. 1 ist eine vorderseitige Ansicht des Fahrradgriffs 100-1 gezeigt, wohingegen in der Fig. 2 eine rückseitige Ansicht des Fahrradgriffs 100-1 gezeigt ist.

Auch wenn dies in der Fig. 1 und in der Fig. 2 nicht dargestellt ist, weist der Fahrradgriff 100-1 eine Innenhülse auf, welche aus einem nicht verformbaren Material, insbesondere aus einem nicht verformbaren Kunststoff gebildet ist, wobei die Innenhülse einen in Fig. 1 und Fig. 2 nicht dargestellten Befestigungsbereich aufweist, welcher an einer in Fig. 1 und Fig. 2 nicht dargestellten Lenkstange eines Fahrradgriffs 100-1 befestigbar ist.

Der nicht verformbare Kunststoff der Innenhülse umfasst insbesondere ein Thermoplast, insbesondere Polypropylen.

Um den Fahrradgriff 100-1 wirksam an der Lenkstange des Fahrrads zu befestigen, weist der Fahrradgriff 100-1 ein in Fig. 1 und Fig. 2 dargestelltes Befestigungselement 101, insbesondere Klemmring 101-1 auf, welcher zumindest abschnittsweise umlaufend an dem in Fig. 1 und Fig. 2 nicht dargestellten Befestigungsbereich der Innenhülse anliegt, um den Befestigungsbereich an der Lenkstange zu befestigen.

Die in Fig. 1 und Fig. 2 nicht dargestellte Innenhülse weist beispielsweise einen Hülseninnenraum auf, in welchen die Lenkstange des Fahrradgriffs 100-1 eingeschoben werden kann, um den Fahrradgriff 100-1 an der Lenkstange zu positionieren.

Das Befestigungselement 101, insbesondere Klemmring 101-1, weist einen Anlegebereich 103 auf, welcher ausgebildet ist, an dem Befestigungsbereich der Innenhülse anzuliegen, weist einen Befestigungsspalt 105 auf, und weist einen Befestigungsdurchbruch 107 auf, durch welchen ein Befestigungsmittel geführt werden kann, um das Befestigungselement 101 an der Lenkstange zu befestigen.

Insbesondere ist das Befestigungsmittel als eine Klemmschraube ausgebildet, welche in ein Gewinde des Befestigungsdurchbruchs 107 eingeschraubt werden kann, um die Breite des Befestigungsspalts 105 zu reduzieren, und dadurch den Anlegebereich 103 des Befestigungselements 101 wirksam an den Befestigungsbereich der Innenhülse und damit an die Lenkstange, welche in die Innenhülse eingeführt ist, zu klemmen.

Somit stellt das Befestigungselement 101, insbesondere Klemmring 101-1, eine wirksame Befestigung des Fahrradgriffs 100-1 an der Lenkstange des Fahrrads sicher.

Der Fahrradgriff 100-1 weist ferner eine in Fig. 1 und Fig. 2 dargestellte Außenschicht 109-1 auf, welche an einer Außenseite der in Fig. 1 und Fig. 2 nicht dargestellten Innenhülse angeordnet ist, und aus einem verformbaren Kunststoff gebildet ist.

Die aus einem verformbaren Kunststoff bestehende Außenschicht 109-1 des Fahrradgriff 100-1 wird von dem Nutzer mit der Hand gegriffen, so dass sich ein ergonomisch angenehmes Greifen ergibt.

Ferner ist innerhalb des verformbaren Kunststoffs der Außenschicht 109-1 des Fahrradgriffs 100-1 eine Oberflächen-modifizierende Substanz diffusionsstabil eingebettet. Die Oberflächen-modifizierende Substanz ist ausgebildet, eine Oberflächeneigenschaft einer Außenoberfläche 111 der Außenschicht 109-1 zu verändern, um eine Besiedelung der Außenoberfläche 111 durch Mikroorganismen zu verhindern.

Der vorliegenden Anmeldung liegt das Problem zugrunde, dass bei herkömmlichen Griffen 100 oftmals eine hohe Keimbelastung an der Außenoberfläche 111 auftreten kann. Dies ist insbesondere dann der Fall, wenn durch einen Nutzer bei einem Ergreifen des Griffs Keime und/oder Flüssigkeiten, wie Körperschweiß, auf die Außenoberfläche 111 des Griffs 100 übertragen werden.

Eine an der Außenoberfläche 111 von herkömmlichen Griffen 100 auftretende hohe Keimbelastung resultiert aus der starken Vermehrung von Mikroorganismen, wie z.B. Bakterien, Algen, Pilzen, Viren, und/oder Protozoen, bei für die Mikroorganismen günstigen Umgebungsbedingungen, wie beispielsweise bei einer für die Mikroorganismen optimalen Temperatur und/oder einer feuchten Umgebung.

Durch die entsprechend hohe Keimbelastung an der Außenoberfläche 111 von herkömmlichen Griffen 100 kann es zu Einschränkungen bei der Hygiene, bzw. zu Übertragung von Erkrankungen kommen, wenn mehrere Personen die Griffe 100 ergreifen, bzw. zudem zu Freisetzung von unangenehmen Gerüchen, bzw. zudem zu einer Verfärbung von entsprechenden Griffen.

Um die Keimbelastung des Fahrradgriffs 100-1 zu verhindern, bzw. die Menge der gebildeten Mikroorganismen signifikant zu reduzieren, weist der Fahrradgriff 100-1 gemäß der vorliegenden Anmeldung eine in Fig. 1 und Fig. 2 nicht dargestellte Oberflächen-modifizierende Substanz auf, welche eine Oberflächeneigenschaft der Außenoberfläche 111 der Außenschicht 109-1 des Fahrradgriffs 100-1 derart verändert, um eine Besiedelung der Außenoberfläche 111 der Außenschicht 109-1 durch Mikroorganismen zu verhindern, insbesondere signifikant zu reduzieren.

Innerhalb des verformbaren Kunststoffs der Außenoberfläche 111 der Außenschicht 109-1 ist die Oberflächen-modifizierende Substanz diffusionsstabil eingebettet, wobei die eingebettete Oberflächen-modifizierende Substanz in der Fig. 1 und Fig. 2 nicht dargestellt ist. Der verformbare Kunststoff der Außenoberfläche 111 der Außenschicht 109-1 ist durch die Oberflächen-modifizierende Substanz 107 nicht oder nur in äußerst geringem Ausmaß durchdringbar, so dass die Oberflächen-modifizierende Substanz 107 nicht oder nur in äußerst geringem Ausmaß an den Außenbereich des Fahrradgriffs 100-1 abgegeben wird und somit in dem verformbaren Kunststoff der Außenschicht 109-1 verbleibt.

Auch wenn dies in der Fig. 1 und Fig. 2 nicht dargestellt ist, weist die aus einem verformbaren Kunststoff geformte Außenschicht 109-1 insbesondere eine Kunststoff-Matrix mit Matrixaufnahmen auf, in welcher, bzw. in welchen die Oberflächen-modifizierende Substanz diffusionsstabil eingebettet ist, wobei die Kunststoff-Matrix ausgebildet ist, ein Abgeben der Oberflächen-modifizierenden Substanz in über die Außenoberfläche 111 zu verhindern, bzw. signifikant zu reduzieren.

Somit wirkt die Oberflächen-modifizierende Substanz nicht direkt toxisch auf Mikroorganismen an der Außenoberfläche 111 der Außenschicht 109-1, sondern modifiziert vielmehr die Oberflächeneigenschaften der Außenoberfläche 111 der Außenschicht 109-1 des Fahrradgriffs 100-1 derart, dass eine Besiedelung der Außenoberfläche 111 durch Mikroorganismen verhindert, bzw. stark reduziert wird.

Insbesondere ist die Oberflächen-modifizierende Substanz in die gesamte aus dem verformbaren Kunststoff geformte Außenschicht 109-1 eingebettet.

Alternativ ist die Oberflächen-modifizierende Substanz insbesondere in einem der Außenoberfläche 111 zugewandten Bereich der aus dem verformbaren Kunststoff geformten Außenschicht 109-1 eingebettet ist, wobei insbesondere der Bereich durch die Außenoberfläche 111 begrenzt ist und sich von der Außenoberfläche 111 aus in Richtung der Innenhülse erstreckt.

Der Bereich erstreckt sich hierbei nicht vollständig von der Außenoberfläche 111 der Außenschicht 109-1 zu dem Rand der Innenhülse. Somit umfasst der Bereich lediglich einen dünnen die Außenoberfläche 111 umlaufenden Abschnitt des radial äußeren Teils der Außenschicht 109-1, welcher in Kontakt mit der Außenseite des Fahrradgriffs 100-1 steht.

Insbesondere weist der durch die Außenoberfläche 111 begrenzte und sich von der Außenoberfläche 111 aus in Richtung der Innenhülse erstreckende Bereich eine Dicke zwischen 1 nm und 100 µm, insbesondere zwischen 1 nm und 10 µm, insbesondere zwischen 1 nm und 1 µm, insbesondere zwischen 1 nm und 100 nm auf, und ist damit deutlich dünner als die gesamte Dicke der Außenschicht 109-1.

Insbesondere umfasst die Oberflächen-modifizierende Substanz 107 eine Oberflächen-polarisierende Substanz, welche ausgebildet ist, eine Polarisation der Außenoberfläche 111 der Außenschicht 109-1 zu verändern, um eine Besiedelung der Außenoberfläche 111 durch Mikroorganismen zu verhindern, bzw. stark zu reduzieren.

Insbesondere wird durch die Veränderung der Polarisation der Außenoberfläche 111 eine bipolar polarisierte Außenoberfläche 111 erhalten, um eine Besiedelung der Außenoberfläche 111 durch Mikroorganismen zu verhindern, bzw. stark zu reduzieren.

Eine entsprechende bipolar polarisierte Außenoberfläche 111 der Außenschicht 109-1 weist sowohl positive Partialladungen als auch negative Partialladungen auf, welche an der Außenoberfläche 111 anhaftende Mikroorganismen beeinträchtigen.

Insbesondere umfasst die Oberflächen-modifizierende Substanz, insbesondere Oberflächen-polarisierende Substanz eine Sterion-Substanz, welche ausgebildet ist, eine Besiedelung der Außenoberfläche 111 durch Mikroorganismen zu verhindern, bzw. signifikant zu reduzieren, wobei die Sterion-Substanz insbesondere eine metallorganische Verbindung umfasst.

Eine Sterion-Substanz umfassend eine metallorganische Verbindung kann von der Firma SteriOne GmbH & Co. KG, Berlin, Deutschland, bezogen werden. Insbesondere kann ein Batch verwendet werden, in welchem die metallorganische Verbindung mit einem spezifischen Trägermaterial verwendet wird, um eine optimale Verteilung und Dosierung der metallorganischen Verbindung in dem Kunststoff der Außenschicht 109-1 sicherzustellen.

Eine metallorganische Verbindung umfasst hierbei insbesondere ein Metall, insbesondere Übergangsmetall, insbesondere Kupfer, welches eine positive Partialladung in der metallorganische Verbindung bereitstellt, und einen oder eine Mehrzahl von organischen Liganden, welcher eine negative Partialladung in der metallorganische Verbindung bereitstellt, um eine wirksame Polarisation der Außenoberfläche 111 der Außenschicht 109-1 zu erreichen.

Der zumindest eine organische Ligand der metallorganischen Verbindung kann hierbei insbesondere Heteroatome, wie z.B. Schwefel, Stickstoff und/oder Sauerstoff umfassen, welche eine negative Partialladung in der metallorganische Verbindung bereitstellen.

Insbesondere umfasst die metallorganische Verbindung eine Kupfer-Thiolat-Verbindung, welche insbesondere auf einem Bariumsulfat-Substrat angeordnet ist.

Die metallorganische Verbindung kann in der Außenschicht 109-1 in einem Konzentrationsbereich von 0,1 Gew.-% bis 1 Gew.-%, insbesondere von 0,025 Gew.-% bis 0,1 Gew.-% vorhanden sein. Hier beziehen sich die angegebenen Konzentrationsbereiche auf das Gewicht der metallorganische Verbindung in der Außenschicht 109-1 in Bezug auf die Summe aus dem Gewicht des verformbaren Kunststoffs und der metallorganischen Verbindung in der Außenschicht 109-1.

Die Sterion-Substanz, welche eine metallorganische Verbindung umfasst, grenzt sich gegenüber herkömmlichen antimikrobiellen Wirkstoffen, wie beispielsweise Nanometallen, wie z.B. Silber, dadurch ab, dass die Sterion-Substanz nicht aus der Außenschicht 109-1 über die Außenoberfläche 111 an den Außenbereich des Fahrradgriffs 100-1 abgegeben wird, so dass ein Nutzer des Fahrradgriffs 100-1, welcher den Fahrradgriff 100-1 ergreift, nicht mit der Sterion-Substanz in Kontakt kommt. Zudem nimmt die Wirksamkeit der Sterion-Substanz während der Betriebsdauer des Fahrradgriffs 100-1 nicht oder nur in geringem Maße ab.

Somit kann durch die Sterion-Substanz, welche eine metallorganische Verbindung umfasst, eine hohe antimikrobielle Wirksamkeit der Außenoberfläche 111 des Fahrradgriffs 100-1 während der Betriebsdauer des Fahrradgriffs 100-1 sichergestellt werden, ohne dass die Sterion-Substanz an den Außenbereich des Fahrradgriffs 100-1 abgegeben wird.

Damit die Oberflächen-modifizierende Substanz in die Außenschicht 109-1 des Fahrradgriffs 100-1 eingebracht werden kann, wird der verformbare Kunststoff und die Oberflächen-modifizierende Substanz insbesondere bereits bei der Herstellung der Außenschicht 109-1 miteinander vermischt und anschließend aus der Mischung umfassend den verformbaren Kunststoff und die Oberflächen-modifizierende Substanz die Außenschicht 109-1 geformt, insbesondere im Rahmen eines Extrusionsvorgangs oder im Rahmen eines Spritzgussvorgangs.

Der verformbare Kunststoff der Außenschicht 109-1 weist hierbei insbesondere einen einzigen verformbaren Kunststoff oder eine Mehrzahl von unterschiedlichen verformbaren Kunststoffen auf.

Insbesondere umfasst der verformbare Kunststoff der Außenschicht 109-1 ein Elastomer, und/oder ein thermoplastisches Elastomer (TPE), insbesondere ein Styrol-Block-Copolymer (TPS).

Somit können durch das Einbetten der Oberflächen-modifizierenden Substanz in den verformbaren Kunststoff der Außenschicht 109-1 Mikroorganismen an der Außenoberfläche 111 der Außenschicht 109-1 wirksam beeinträchtigt werden, und die Besiedelung des Fahrradgriffs 100-1 mit Mikroorganismen kann verhindert werden, bzw. signifikant reduziert werden.

Ferner weist die Außenschicht 109-1 insbesondere eine Mehrzahl von Noppen 113 auf, welche an der Außenoberfläche 111 der Außenschicht 109-1 angeordnet sind, wobei die Noppen 113 insbesondere in konzentrischen Ringen entlang der Außenoberfläche 111 angeordnet sind. Die Noppen 113 verhindern ein Abgleiten der Hand des Nutzers von der Außenoberfläche 111.

Ferner ist insbesondere zwischen einem ersten Außenschichtsende 115-1 und einem dem ersten Außenschichtsende 115-1 abgewandten zweiten Außenschichtsende 115-2 der Außenschicht 109-1 ein mittiger Bereich 117 der Außenschicht 109-1 geformt, wobei der mittige Bereich insbesondere einen größeren Durchmesser aufweist, als der Durchmesser des ersten und/oder zweiten Außenschichtendes 115-1, 115-2. Der mittige Bereich 117 stellt eine wirksame Stütze der Handinnenfläche der Hand des Nutzers des Fahrradgriffs 100-1 sicher.

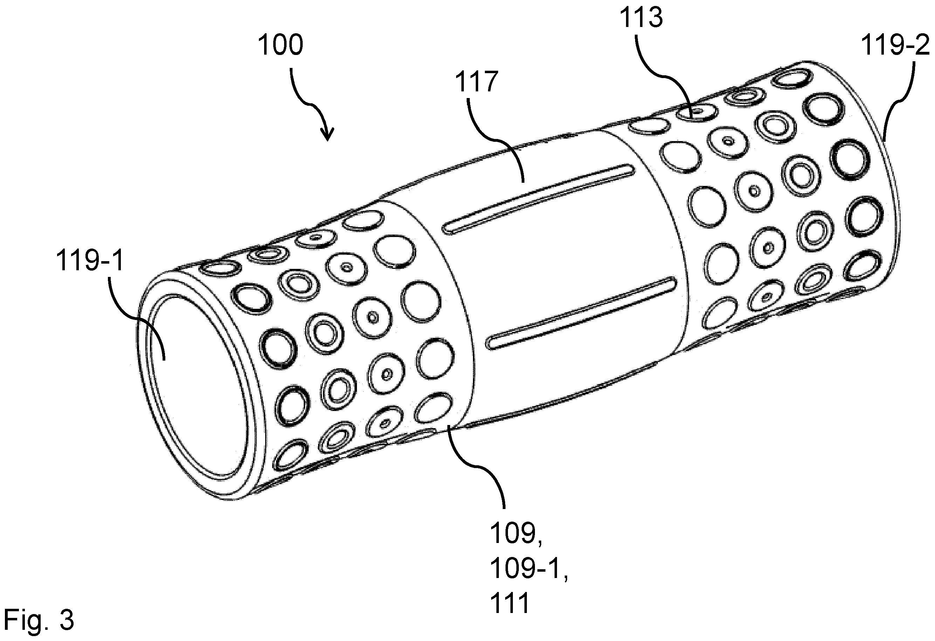

Fig. 3 zeigt eine schematisch Ansicht eines Griffs gemäß einer weiteren Ausführungsform. Der in Fig. 3 gezeigte Fahrradgriff 100-1 gemäß der weiteren Ausführungsform entspricht dem in Fig. 1 und Fig. 2 gezeigten Fahrradgriff 100-1, bis darauf, dass der Fahrradgriff 100-1 gemäß der in Fig. 3 gezeigten weiteren Ausführungsform keine Innenhülse und auch kein Befestigungselement 101 zum Befestigen des Fahrradgriffs 100-1 an der Lenkstange des Fahrrads aufweist.

Vielmehr ist in der in Fig. 3 gezeigten weiteren Ausführungsform die Außenschicht 109-1 des Fahrradgriffs 100-1 als eine Außenhülse geformt, in welche die Lenkstange des Fahrrads direkt eingeführt wird.

Hierbei weist die als Außenhülse ausgebildete Außenschicht 109-1 an einem ersten Ende eine erste Außenhülsenöffnung 119-1 auf, durch welche die Lenkstange in einen Außenhülseninnenraum der Außenhülse einführbar ist, um den Fahrradgriff 100-1 an der Lenkstange anzuordnen, und wobei die Außenhülse insbesondere an einem dem ersten Ende abgewandten zweiten Ende eine zweite Außenhülsenöffnung 119-2 aufweist, wobei die zweite Außenhülsenöffnung 119-2 insbesondere nicht verschlossen ausgebildet ist, oder insbesondere durch ein Verschlusselement verschlossen ist.

Die als Außenhülse ausgebildete Außenschicht 109-1 kann beispielsweise saugend oder geklebt auf die Lenkstange montiert werden.

Für weitere Details in Bezug auf die Außenschicht 109-1 wird auf die umfangreichen Ausführungen zu den Figuren 1 und 2 verwiesen.

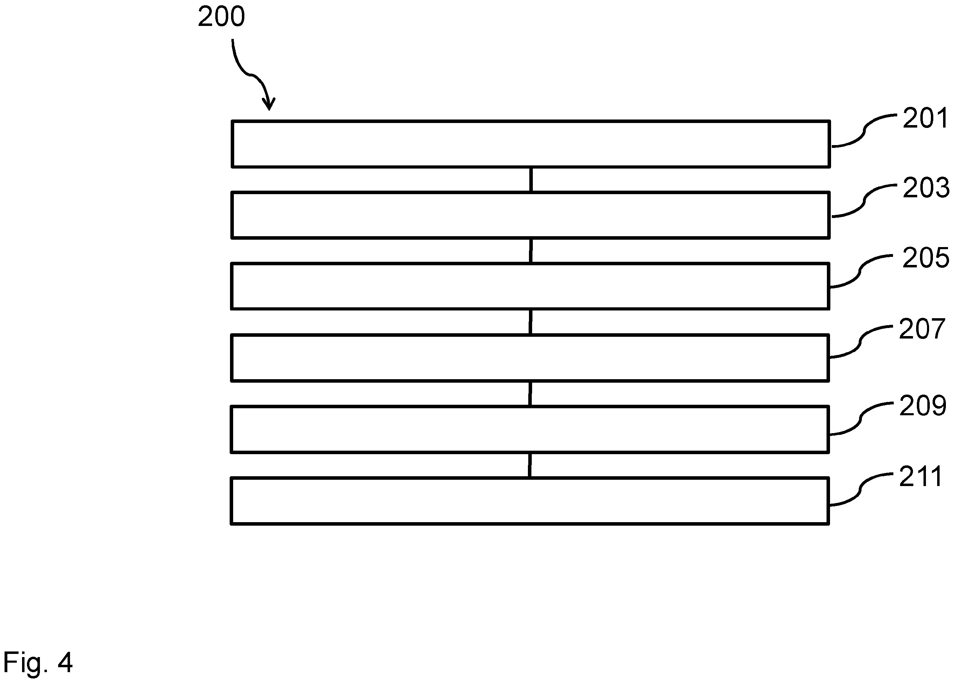

Fig. 4 zeigt eine schematische Darstellung eines Verfahrens zum Herstellen eines Griffs gemäß der vorliegenden Anmeldung.

Das Verfahren 200 umfasst als ersten Verfahrensschritt das Bereitstellen 201 von einem verformbaren Kunststoff.

Das Verfahren 200 umfasst als zweiten Verfahrensschritt das Bereitstellen 203 von einer Oberflächen-modifizierenden Substanz.

Das Verfahren 200 umfasst als dritten Verfahrensschritt das Mischen 205 des verformbaren Kunststoffs mit der Oberflächen-modifizierenden Substanz.

Das Verfahren 200 umfasst als vierten Verfahrensschritt das Schmelzen 207 der Mischung umfassend den verformbaren Kunststoff und die Oberflächen-modifizierende Substanz, um eine Kunststoffschmelze zu erhalten.

Das Verfahren 200 umfasst als fünften Verfahrensschritt das Formen 209, insbesondere Spritzgießen oder Extrudieren, der Kunststoffschmelze, um ein Greifelement 109 aus verformbaren Kunststoff zu erhalten, wobei innerhalb des verformbaren Kunststoffs die Oberflächen-modifizierende Substanz diffusionsstabil eingebettet ist.

Das Verfahren 200 umfasst als sechsten Verfahrensschritt das Vulkanisieren 211 des verformbaren Kunststoffs des Greifelements 109, um den Griff 100 herzustellen.

Insbesondere wird das Vulkanisieren 211 nach dem Formen 209, insbesondere Spritzgießen oder Extrudieren, der Kunststoffschmelze durchgeführt, oder wird das Aufbringen 209, insbesondere Spritzgießen oder Extrudieren, der Kunststoffschmelze und das Vulkanisieren 211 in einem gemeinsamen Verfahrensschritt durchführt.

Wenn der Griff 100 ein Innenelement umfasst, geht dem Verfahren 200 als vorangehender Verfahrensschritt das Herstellen 201, insbesondere Spritzgießen oder Extrudieren, einer Innenhülse aus einem nicht verformbaren Kunststoff voraus, wobei das Formen 209 des Greifelements 109 in diesem Fall auf der Innenhülse durchgeführt wird.

Alle in Verbindung mit einzelnen Ausführungsformen der Anmeldung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Anmeldung ist durch die Ansprüche gegeben und wird durch die in der Beschreibung erläuterten oder den Figuren gezeigten Merkmale nicht beschränkt.

### BEZUGSZEICHENLISTE

- 100: Griff
- 100-1: Fahrradgriff
- 101: Befestigungselement
- 101-1: Klemmring
- 103: Anlegebereich
- 105: Befestigungsspalt
- 107: Befestigungsdurchbruch
- 109: Greifelement
- 109-1: Außenschicht
- 111: Außenoberfläche
- 113: Noppe
- 115-1: Erstes Außenschichtende
- 115-2: Zweites Außenschichtende
- 117: Mittiger Bereich
- 119-1: Erste Außenhülsenöffnung
- 119-2: Zweite Außenhülsenöffnung
- 200: Verfahren zum Herstellen eines Fahrradgriffs
- 201: Verfahrensschritt: Bereitstellen von einem verformbaren Kunststoff
- 203: Verfahrensschritt: Bereitstellen von einer Oberflächen-modifizierenden Substanz
- 205: Verfahrensschritt: Mischen des verformbaren Kunststoffs mit der Oberflächenmodifizierenden Substanz
- 207: Verfahrensschritt: Schmelzen der Mischung
- 209: Verfahrensschritt: Aufbringen der Kunststoffschmelze auf Innenhülse
- 211: Verfahrensschritt: Vulkanisieren des verformbaren Kunststoffs

## Patentansprüche

1. Griff (100), welcher an einem Strukturbauteil, befestigbar ist,
umfassend:
ein Greifelement (109), welches an dem Strukturbauteil anordbar ist, und aus einem verformbaren Kunststoff gebildet ist, wobei innerhalb des verformbaren Kunststoffs eine Oberflächen-modifizierende Substanz diffusionsstabil eingebettet ist, und
wobei die Oberflächen-modifizierende Substanz ausgebildet ist, eine Oberflächeneigenschaft einer Außenoberfläche (111) des Greifelements (109) zu verändern, um eine Besiedelung der Außenoberfläche (111) durch Mikroorganismen zu verhindern.

2. Griff (100) nach Anspruch 1, wobei der Griff (100) als ein Fahrradgriff (100-1), ein Motorradgriff, ein Regenschirmgriff, ein E-Scooter-Griff, ein Ruderbootgriff, ein Nordic-Walking-Griff, ein Einkaufwagengriff, ein Klobürstengriff, ein Haltegriff im öffentlichen Bereich, im medizinischen Bereich oder im Sanitärbereich, ein Haltegriff in Bus und Bahn, ein Türgriff, ein Griff an Armlehnen oder dergleichen ausgebildet ist.

3. Griff (100) nach Anspruch 2, wobei der Griff (100) als ein Fahrradgriff (100-1) ausgebildet ist, welcher an einer Lenkstange eines Fahrrads befestigbar ist, umfassend:
ein als Außenschicht (109-1) ausgebildetes Greifelement (109), welches an der Lenkstange anordbar ist, und aus einem verformbaren Kunststoff gebildet ist, wobei innerhalb des verformbaren Kunststoffs eine Oberflächen-modifizierende Substanz diffusionsstabil eingebettet ist, und
wobei die Oberflächen-modifizierende Substanz ausgebildet ist, eine Oberflächeneigenschaft einer Außenoberfläche (111) der Außenschicht (109-1) zu verändern, um eine Besiedelung der Außenoberfläche (111) durch Mikroorganismen zu verhindern.

4. Griff (100) nach einem der vorangehenden Ansprüche, wobei die Oberflächen-modifizierende Substanz eine Oberflächen-polarisierende Substanz umfasst, welche ausgebildet ist, eine Polarisation der Außenoberfläche (111) des Greifelements (109), insbesondere Außenschicht (109-1) zu verändern, um eine Besiedelung der Außenoberfläche (111) durch Mikroorganismen zu verhindern, wobei die Oberflächen-polarisierende Substanz (107) insbesondere eine Sterion-Substanz umfasst.

5. Griff (100) nach einem der vorangehenden Ansprüche, wobei die Oberflächen-modifizierende Substanz, insbesondere Oberflächen-polarisierende Substanz, eine metallorganische Verbindung umfasst, wobei die metallorganische Verbindung insbesondere eine Kupfer-Thiolat-Verbindung umfasst.

6. Griff (100) nach einem der vorangehenden Ansprüche, wobei die Oberflächen-modifizierende Substanz, insbesondere Oberflächen-polarisierende Substanz, in dem Greifelement (109) in einem Konzentrationsbereich von 0,01 Gew.-% bis 1 Gew.-%, insbesondere von 0,025 Gew.-% bis 0,1 Gew.-% vorhanden ist.

7. Griff (100) nach einem der vorangehenden Ansprüche, wobei die Oberflächen-modifizierende Substanz in das gesamte aus dem verformbaren Kunststoff geformte Greifelement (109), insbesondere Außenschicht (109-1) eingebettet ist, oder
wobei die Oberflächen-modifizierende Substanz in einem der Außenoberfläche (111) zugewandten Bereich des aus dem verformbaren Kunststoff geformten Greifelements (109), insbesondere Außenschicht (109-1) eingebettet ist, wobei insbesondere der Bereich durch die Außenoberfläche (111) begrenzt ist und sich von der Außenoberfläche (111) aus nach innen erstreckt.

8. Griff (100) nach einem der vorangehenden Ansprüche, wobei das aus einem verformbaren Kunststoff geformte Greifelement (109), insbesondere Außenschicht (109-1) eine Kunststoff-Matrix aufweist, in welcher die Oberflächen-modifizierende Substanz diffusionsstabil eingebettet ist, wobei die Kunststoff-Matrix ausgebildet ist, ein Abgeben der Oberflächen-modifizierenden Substanz über die Außenoberfläche (111) zu reduzieren, insbesondere zu verhindern.

9. Griff (100) nach einem der vorangehenden Ansprüche, wobei der verformbare Kunststoff des Greifelements (109), insbesondere Außenschicht (109-1) ein Elastomer, und/oder ein thermoplastisches Elastomer (TPE), insbesondere ein Styrol-Block-Copolymer (TPS) umfasst.

10. Griff (100) nach einem der vorangehenden Ansprüche, wobei der Griff (100) ein Innenelement aufweist, welches aus einem nicht verformbaren Material gebildet ist, wobei das Innenelement einen Befestigungsbereich aufweist, welcher an dem Strukturbauteil befestigbar ist, wobei das Greifelement an einer Außenseite des Innenelements angeordnet ist, wobei das nicht verformbare Material insbesondere als ein nicht verformbarer Kunststoff ausgebildet ist, welcher insbesondere ein Thermoplast, insbesondere Polypropylen, umfasst.

11. Griff (100) nach Anspruch 10, wobei des Innenelement, insbesondere die Innenhülse mit dem Greifelement (109), insbesondere der Außenschicht (109-1), stoffschlüssig verbunden ist.

12. Griff (100) nach einem der vorangehenden Ansprüche 3 bis 11, wobei der Fahrradgriff ein als Innenhülse ausgebildetes Innenelement umfasst, welches aus einem nicht verformbaren Material gebildet ist, wobei die Innenhülse einen Befestigungsbereich aufweist, welcher an der Lenkstange befestigbar ist; wobei die Außenschicht an der Außenseite der Innenhülse angeordnet ist, wobei die Innenhülse insbesondere an einem ersten Ende eine erste Hülsenöffnung aufweist, durch welche die Lenkstange in einen Hülseninnenraum der Innenhülse einführbar ist, um den Griff (100) an der Lenkstange anzuordnen, und wobei die Innenhülse insbesondere an einem dem ersten Ende abgewandten zweiten Ende eine zweite Hülsenöffnung aufweist, wobei die zweite Hülsenöffnung insbesondere nicht verschlossen ausgebildet ist, oder insbesondere durch ein Verschlusselement verschlossen ist.

13. Griff (100) nach einem der vorangehenden Ansprüche 12, wobei der Fahrradgriff (100-1) ein Befestigungselement (101), insbesondere Klemmring (101-1), umfasst, welcher zumindest abschnittsweise umlaufenden an dem Befestigungsbereich der Innenhülse anliegt, um den Befestigungsbereich an der Lenkstange zu befestigen.

14. Verfahren (200) zum Herstellen eines Griffs (100), wobei das Verfahren (200) die folgenden Verfahrensschritte umfasst:
Bereitstellen (201) eines verformbaren Kunststoffs;
Bereitstellen (203) einer Oberflächen-modifizierenden Substanz;
Mischen (205) des verformbaren Kunststoffs mit der Oberflächen-modifizierenden Substanz;
Schmelzen (207) der Mischung umfassend den verformbaren Kunststoff und die Oberflächen-modifizierende Substanz, um eine Kunststoffschmelze zu erhalten;
Formen (209), insbesondere Spritzgießen oder Extrudieren, der Kunststoffschmelze, um ein Greifelement (109) aus verformbaren Kunststoff zu erhalten, wobei innerhalb des verformbaren Kunststoffs die Oberflächen-modifizierende Substanz diffusionsstabil eingebettet ist; und
Vulkanisieren (211) des verformbaren Kunststoffs des Greifelements (109), um den Griff (100) herzustellen.

15. Verfahren (200) nach Anspruch 14, wobei das Vulkanisieren (211) nach dem Formen (209), insbesondere Spritzgießen oder Extrudieren, der Kunststoffschmelze durchgeführt wird, oder wobei das Formen (209), insbesondere Spritzgießen oder Extrudieren, der Kunststoffschmelze und das Vulkanisieren (211) in einem gemeinsamen Verfahrensschritt durchführt wird.
